# EUROPÄISCHE PATENTSCHRIFT

(11) **EP 3 625 129 B1**
(45) Veröffentlichungstag und Bekanntmachung des Hinweises auf die Patenterteilung: **29.06.2022**
(21) Anmeldenummer: 18725171.5
(22) Anmeldetag: 14.05.2018
(51) Int. Cl.: B64D 13/04, F16K 15/03, F16K 17/196

(54) **VORRICHTUNG ZUM AUSGLEICHEN EINER DRUCKDIFFERENZ FÜR EIN LUFTFAHRZEUG**
DEVICE FOR EQUALIZING A PRESSURE DIFFERENCE FOR AN AIRCRAFT
DISPOSITIF DE CONTREPRESSION POUR COMPENSER UNE DIFFÉRENCE DE PRESSION D'UN AÉRONEF

(30) Priorität: 15.05.2017 DE 102017208115
(43) Veröffentlichungstag der Anmeldung: 25.03.2020
(73) Patentinhaber: Lufthansa Technik AG, 22335 Hamburg (DE)
(72) Erfinder: INSEL, Johannes, 20257 Hamburg (DE); BEGEMANN, Sebastian, verstorben (DE); KOCH, Daniel, 20357 Hamburg (DE)
(74) Vertreter: Müller Verweyen
(86) Internationale Anmeldenummer: PCT/EP2018/062361
(87) Internationale Veröffentlichungsnummer: WO 2018/210744

(56) Entgegenhaltungen:
- EP-A1- 3 228 535
- US-A1- 2010 096 035
- US-A1- 2016 272 334
- US-B1- 9 114 869

## Beschreibung

Die vorliegende Erfindung betrifft eine Vorrichtung zum Ausgleichen einer Druckdifferenz für ein Luftfahrzeug mit den Merkmalen des Oberbegriffs von Anspruch 1.

In Flugzeugen, insbesondere in Passagierflugzeugen ist in der Regel ein Großteil des Flugzeuginnenvolumens als Druckkabine ausgestaltet, in welcher der Luftdruck während eines Fluges auf ein für mitfliegende Personen angepasstes Maß reguliert wird. Dies ist aufgrund der großen Druckunterschiede zu dem üblichen, auf Flughöhe vorherrschenden Umgebungsdruck notwendig. Es kann dabei das gesamte Innenvolumen als Druckkabine ausgestaltet sein, oder auch nur für den Aufenthalt von Personen während des Fluges vorgesehene Teilbereiche, beispielsweise ohne den Frachtraum.

Im Rahmen von Modifikationen von Flugzeugkabinen, insbesondere im Bereich des VIP-Ausbaus von Passagierflugzeugkabinen, ist es üblich, im Verhältnis zum gesamten Passagiervolumen kleine Passagierabteile zu unterschiedlichen Zwecken, beispielsweise als Konferenz-, Ruhe- oder Medienraum, abzutrennen und die Kabinen durch die Installation verschiedener, teils raumhoher Möbel zu unterteilen. Es werden auch häufig weitere Möbelstücke, beispielsweise als Aufbewahrungseinrichtungen, eingebaut, die im Verhältnis zum Passagierabteil, in dem sie eingebaut sind, ein kleineres Raumvolumen aufweisen.

Im Falle eines rapiden Druckabfalls, beispielsweise durch Beschädigung der Bordwand des Flugzeugs im Bereich eines solchen Passagierabteils, führt die plötzliche Dekompression der Druckkabine, die nachfolgend als ein erster Raum bezeichnet wird, zu einem plötzlichen Druckabfall in diesem ersten Raum. Ein zweiter Raum, der an den ersten Raum angrenzt und durch wenigstens eine Trennwand von dem ersten Raum abgetrennt ist, kann diesen Druckabfall nur zeitverzögert vollziehen, so dass zumindest für einen kurzen Zeitraum eine Druckdifferenz zwischen dem ersten und dem zweiten Raum besteht, die an der Trennwand anliegt. Die Trennwand kann dabei beispielsweise durch eine Raumabtrennung, etwa eine Wand oder Decke, oder eine Außenwand eines Möbelstückes gebildet sein.

Aufgrund der zum Teil relativ geringen Volumina der abgetrennten Räume, können sehr große Differenzdrücke auf die Abteilbegrenzungen bzw. -wände wirken, die erhebliche und gefährliche Folgeschäden verursachen können, nämlich dann, wenn es durch die Druckdifferenz zu einem Zerbersten der Trennwand kommt und sich infolgedessen Teile der Trennwand unkontrolliert durch die Passagierkabine bewegen.

Um derartige übergroße Lasten auf die installierten Wände und Möbel und damit ein Überlasten der Einbauten oder gar der Flugzeugstruktur zu vermeiden, ist es bekannt, ständig geöffnete oder sich aufgrund einer Druckdifferenz öffnende Strömungsöffnungen zwischen den Räumen der Druckkabine vorzusehen. Derartige Strömungsöffnungen sollen das Nutzungs- und Designkonzept, insbesondere beim VIP-Ausbau möglichst wenig beeinträchtigen und sind in der Regel Labyrinth-artig im nicht sichtbaren Bereich angeordnet, oder im Normalbetrieb, d.h. solange eine vorbestimmte kritische Druckdifferenz nicht überschritten ist, durch eine Dekompressionsklappe verschlossen.

Die Befestigung der Dekompressionsklappe an der Trennwand ist derart ausgeführt, dass die Strömungsöffnung kurz vor dem Überschreiten der vorbestimmten, kritischen Druckdifferenz zwischen dem ersten und dem zweiten Raum freigegeben wird. Damit die sich aus der Strömungsöffnung lösende Dekompressionsklappe keine Verletzungen der Passagiere durch die plötzliche Lösebewegung im Dekompressionsfall herbeiführt, ist die Dekompressionsklappe durch eine Sicherungseinrichtung mit einer flugzeugfesten Struktur, beispielsweise mit der Trennwand selbst, verbunden. Diese Verbindung kann beispielsweise durch ein Scharnier oder eine Sicherungsleine realisiert sein. Weiter verhindert die Sicherungseinrichtung eine unkontrollierte Bewegung bei einem ungewollten Lösen der Dekompressionsklappe, beispielsweise durch hohe Beschleunigungen bei Turbulenzen oder während einer Notlandung.

Um das Öffnen der Dekompressionsklappe zu ermöglichen, wird die Dekompressionsklappe durch ein Sicherungselement gehalten, welches bei Überschreiten einer kritischen Druckdifferenz die Dekompressionsklappe freigibt.

Das Sicherungselement ist bei bekannten Lösungen als eine Art Gummilippe realisiert, die zwischen zwei Nuten, jeweils auf der Seite der Trennwand und auf der Seite der Dekompressionsklappe, eingeklemmt wird. Hierbei ist ein Nachteil, dass es sich nicht um alterungsbeständige Materialien handelt und die Auslösedrücke von Einbautoleranzen, Temperaturunterschieden oder Materialalterung abhängen und somit nicht sicher reproduzierbar sind, bzw. große Auslösedruckbereiche auftreten. Das Öffnungsverhalten der Dekompressionsklappe in Abhängigkeit einer definierten Druckdifferenz ist dabei durch aufwändige Erprobung und Anpassung zu ermitteln. Eine entsprechende Dekompressionsklappe und ein zugehöriges Erprobungsverfahren sind beispielsweise aus der DE 10 2015 207 599 B4 bekannt.

Die US 2010/0096035 A1 offenbart eine Unterdruckdruckventilanordnung mit einer Platte, die eine Öffnung abdeckt. Es ist ferner eine Ventilvorspannbaugruppe mit einem elastischen Element zum Vorspannen der Platte in Richtung der Öffnung vorgesehen.

Aufgabe der Erfindung ist es, eine Vorrichtung zum Ausgleichen einer Druckdifferenz mittels einer Dekompressionsklappe bereitzustellen, mit einem besser vorhersagbaren Öffnungsverhalten und genaueren Auslösewerten, die gleichzeitig den Erprobungs- und Wartungsaufwand reduziert.

Die Erfindung löst diese Aufgabe mit einer Vorrichtung gemäß dem unabhängigen Anspruch 1.

Gemäß dem Grundgedanken der Erfindung wird eine Vorrichtung zum Ausgleich einer Druckdifferenz für ein Luftfahrzeug vorgeschlagen, welche eine flächige, luftfahrzeugfeste Trennwand, die einen ersten Raum strömungstechnisch von einem zweiten Raum trennt, umfasst. Die Trennwand weist eine den ersten und zweiten Raum strömungstechnisch verbindende Strömungsöffnung auf, wobei die Strömungsöffnung durch eine Dekompressionsklappe verschlossen ist. Ein Sicherungselement an der Dekompressionsklappe oder der Trennwand ist dazu eingerichtet, eine Lösebewegung der Dekompressionsklappe bei Überschreiten eines vorbestimmten Druckgradienten zwischen dem ersten und dem zweiten Raum freizugeben, so dass eine strömungstechnische Verbindung zwischen dem ersten und dem zweiten Raum besteht, wobei an der Trennwand oder der Dekompressionsklappe ein Aufnahmeelement vorgesehen ist, mit welchem das Sicherungselement in Wirkverbindung steht, wobei das Sicherungselement ein Drehelement und mindestens zwei Fixierelemente umfasst. Das Drehelement ist dabei um eine Drehachse drehbar gelagert und zur Aufnahme in das Aufnahmeelement vorgesehen. Die Fixierelemente fixieren das Drehelement unterhalb des vorbestimmten Druckgradienten spielfrei in einer Fixierposition, wobei mindestens eines der mindestens zwei Fixierelemente ein Federelement ist.

Durch die Fixierelemente ist das Drehelement in der Fixierposition mittig zwischen den Fixierelementen spielfrei, also drehfest fixiert. In der Fixierposition greift das Aufnahmeelement an der Trennwand um ein Ende des Drehelements, so dass die Dekompressionsklappe durch das mit dem einen Ende im Aufnahmeelement und mit dem gegenüber liegenden Ende zwischen den Fixierelementen fixierte Drehelement positionsfest gesichert ist. Wird die Dekompressionsklappe mit Druck beaufschlagt, liegt am Drehelement ein Drehmoment an, das vom anliegenden Druck abhängt. Eine an einen vorbestimmten Druckgradienten angepasste Federstärke eines als Federelement ausgeführten Fixierelements ermöglicht dann eine Rotation des Drehelements aus dessen Fixierposition heraus, wodurch wiederum das Federelement über seine Vorspannkraft hinaus weiter gespannt wird. Ab einer gewissen Drehbewegung des Drehelements und somit einer erreichten Auslösekraft des Federelements löst sich das Drehelement aus der Aufnahme, wodurch die Dekompressionsklappe öffnet und freigegeben wird. Die maximale Auslösekraft wird erreicht, bevor das Drehelement sich gänzlich aus der Aufnahme dreht. So wird eine gute Reproduzierbarkeit erreicht, da der Maximalwert der Auslösekraft nicht vom Auslöseweg abhängig ist. Dabei sind die Auslösedruckbereiche von garantierter Haltekraft bis garantierte Auslösekraft wesentlich enger gefasst, als bei der aus dem Stand der Technik bekannten Lösung mit Gummilippen, wodurch auf ein vorangehendes Modifizieren und Testen der Teile weitestgehend verzichtet werden kann. Für eine rotatorische Öffnung der Dekompressionsklappe kann mindestens eine Auslösevorrichtung an der Dekompressionsklappe vorgesehen sein. Für eine translatorische Öffnung einer Dekompressionsklappe ohne Drehachse sind vorzugsweise zwei oder mehr Auslösevorrichtungen an der Dekompressionsklappe vorgesehen.

Durch die in den abhängigen Ansprüchen aufgeführten Merkmale sind vorteilhafte Weiterbildungen und Verbesserungen der im unabhängigen Anspruch angegebenen Vorrichtung möglich.

Erfindungsgemäß ist vorgesehen, dass das mindestens eine Federelement ein flächiges Biegefederelement ist. Flächige Federelemente lassen sich beispielsweise als Flachfedern kostengünstig mit hoher Präzision herstellen. Durch die flächige Ausführung entstehen ausgedehnte Kontaktbereiche der Federelemente und des Drehelements, wodurch die Kräfte gleichmäßig verteilt werden. Zudem lassen sich flächige Federelemente einfach an einem Halteelement befestigen, beispielsweise durch Klemmbacken, wodurch eine positionsgenaue Montage ermöglicht wird, die insbesondere ein Verkippen vermeidet und somit zu einer präzisen Kraftübertragung beiträgt.

Weiter ist bevorzugt, dass das mindestens eine Federelement vorgespannt ist. Dadurch wird die Federstärke eines einzigen Federelementes einstellbar und es wird vermieden, für unterschiedliche Auslöse-Druckgradienten verschiedene Federelemente zu verwenden, die sich beispielsweise in ihren Abmaßen oder Materialien unterscheiden. Durch die Vorspannung ist das Drehelement fest eingefasst, so dass ein Wackeln unterdrückt wird. Für verschiedene Einsatzgebiete ist somit lediglich die Vorspannkraft einzustellen. Die definierte Vorspannkraft ist dabei derart an den vorbestimmten Auslöse-Differenzdruck angepasst, dass das Drehmoment, das am Drehelement anliegt, erst bei Erreichen des Auslöse-Differenzdrucks eine ausreichende Rückstellkraft für das Federelement bereitstellt, um das Drehelement freizugeben und die Sicherung der Dekompressionsklappe zu lösen.

Gemäß einem bevorzugten Ausführungsbeispiel ist vorgesehen, dass die Drehachse und die Federelemente an einem Halteelement befestigt sind. Durch die Befestigung an einem Bauteil wird die Montage der Vorrichtung erleichtert, da alle Einzelteile bereits vormontiert an dem Halteelement eingebaut werden können. Außerdem erlaubt das Halteelement eine genaue Positionierung des Drehelements im Verhältnis zu den Fixier- bzw. Federelementen.

Dabei ist weiter bevorzugt, dass die Federelemente in einem Befestigungsbereich flächig am Halteelement anliegen. Durch das flächige Anliegen ist eine positionsfeste und gegen Verkippen gesicherte Positionierung und Befestigung der flächigen Federelemente in einer einfachen Art und Weise möglich.

Eine bevorzugte Ausführungsform zeichnet sich dadurch aus, dass an dem Halteelement Anlagekanten vorgesehen sind, wobei die Vorspannung der Federelemente durch Anliegen an den Anlagekanten realisiert ist. Die Anlagekanten des Halteelements können in einfacher Weise durch eine Stufe gebildet sein, die sich aus der Ebene der Anlagefläche des Federelementes im Befestigungsbereich erhebt. Das flächige Federelement wird dadurch von der Anlagefläche weggebogen. Die Vorspannkraft lässt sich beispielsweise durch den Abstand zwischen der Befestigung des Federelements und der Anlagekante sowie durch deren Abmessungen einstellen. Das Fixierende des Drehelements wäre dann entsprechend an die Abmessungen der Anlagekante anzupassen. Weiterhin führt das Anliegen der Federelemente an den Anlagekanten dazu, dass im Normalbetrieb, also unterhalb des vorbestimmten Auslöse-Differenzdrucks, das Drehelement, durch die Wahl geeigneter Abmessungen und Toleranzen, in der Fixierposition spielfrei, aber auch kraftfrei mittig zwischen den Federelementen gelagert ist. Die Federelemente üben im Normalbetrieb keine Kraft auf das Drehelement aus. Bei einer Drehbewegung des Drehelements wird ein Federelement weiter gespannt, während das jeweils andere Federelement weiter an der Anlagekante aufliegt, so dass es keine Kräfte auf das Drehelement ausübt.

In einer alternativen Weiterbildung ist vorgesehen, dass zwei Federelemente mit unterschiedlichen Federstärken verwendet werden. Dies ermöglicht unterschiedliche Auslösedruckgradienten für gegenläufige Strömungsrichtungen. So kann beispielsweise die Dekompressionsklappe, die in einer Trennwand zwischen einem ersten Raum und einem zweiten Raum vorgesehen ist, bei einem Druckabfall im ersten Raum bei einem geringeren Druckgradienten öffnen, als bei einem Druckabfall im zweiten Raum. Das Anliegen der Federelemente an den Anlagekanten ermöglicht auch in diesem Fall eine kraftfreie Lagerung des Drehelements in der Fixierposition.

Alternativ ist vorgesehen, dass ein Fixierelement als starres Element ausgeführt ist. Starr bedeutet in diesem Zusammenhang, dass das Fixierelement explizit nicht als Federelement ausgestaltet ist, sondern bei den zu erwartenden Druckgradienten keiner Biegung, oder anderweitigen elastischen Verformungen unterliegt, sondern formstabil eine Bewegung des Drehelementes in die Richtung des starren Elements blockiert und somit die Öffnung der Dekompressionsklappe in eine Richtung zuverlässig verhindert und sperrt.

Gemäß einem bevorzugten Ausführungsbeispiel ist das Drehelement derart an die Fixierelemente angepasst, dass mindestens ein Fixierelement als Anschlagelement fungiert, das den Drehwinkel des Drehelementes außerhalb der Fixierposition begrenzt. Damit ein Durchschwingen des Drehelements vermieden wird, fungiert das jeweils nicht belastete Federelement als Anschlag für das Drehelement. Weiter bevorzugt ist, dass der Drehwinkel auf 90° von der Fixierposition begrenzt wird. Im ausgelösten Zustand ist das Drehelement somit senkrecht zur Ausgansposition in der Fixierposition positioniert, wodurch das Drehelement nur minimal über den Rand der Dekompressionsklappe übersteht und die Gefahr von Beschädigungen anderer Design- und Wandelemente während des Öffnens der Dekompressionsklappe verkleinert wird.

Eine bevorzugte Ausführungsform zeichnet sich dadurch aus, dass die Seite des Drehelements, die zur Aufnahme am Aufnahmeelement vorgesehen ist, eine abgerundete Form aufweist, um eine möglichst reibungsarme Bewegung zwischen den Teilen zu ermöglichen und ein Verkanten des Drehelements in der Aufnahme zu verhindern.

Weiter ist es bevorzugt, dass an dem Aufnahmeelement Langlöcher vorgesehen sind. Die Montage des Aufnahmeelements wird durch die Langlöcher vereinfacht, indem geeignete Befestigungselemente durch die Langlöcher geführt werden. Die Positionierung des Aufnahmeelements ist durch Verschieben entlang der Langlöcher einstellbar, um eine optimale Positionierung des Drehelements in dem Aufnahmeelement zu gewährleisten. Es kann auf diese Weise auch im montierten Zustand eingestellt werden.

Die Erfindung wird im Folgenden anhand bevorzugter Ausführungsformen unter Bezugnahme auf die beigefügten Figuren erläutert. Dabei zeigt:
- Fig. 1: eine schematische Darstellung einer erfindungsgemäßen Vorrichtung zum Ausgleich einer Druckdifferenz für ein Luftfahrzeug;
- Fig. 2: eine schematische Darstellung einer erfindungsgemäßen Vorrichtung zum Ausgleich einer Druckdifferenz kurz nach einem plötzlichen Druckabfall;
- Fig. 3: ein Ausführungsbeispiel einer erfindungsgemäßen Vorrichtung zum Ausgleich einer Druckdifferenz für ein Luftfahrzeug mit einer Trennwand, einer Dekompressionsklappe im Normalbetrieb;
- Fig. 4: eine Ansicht eines Ausführungsbeispiels einer erfindungsgemäßen Vorrichtung zum Ausgleich einer Druckdifferenz für ein Luftfahrzeug;
- Fig. 5: eine Draufsicht des in Fig. 4 dargestellten Ausführungsbeispiels einer erfindungsgemäßen Vorrichtung zum Ausgleich einer Druckdifferenz für ein Luftfahrzeug;
- Fig. 6: eine Ansicht einer alternativen Ausführungsform einer erfindungsgemäßen Vorrichtung zum Ausgleich einer Druckdifferenz für ein Luftfahrzeug mit einem starren Fixierelement.

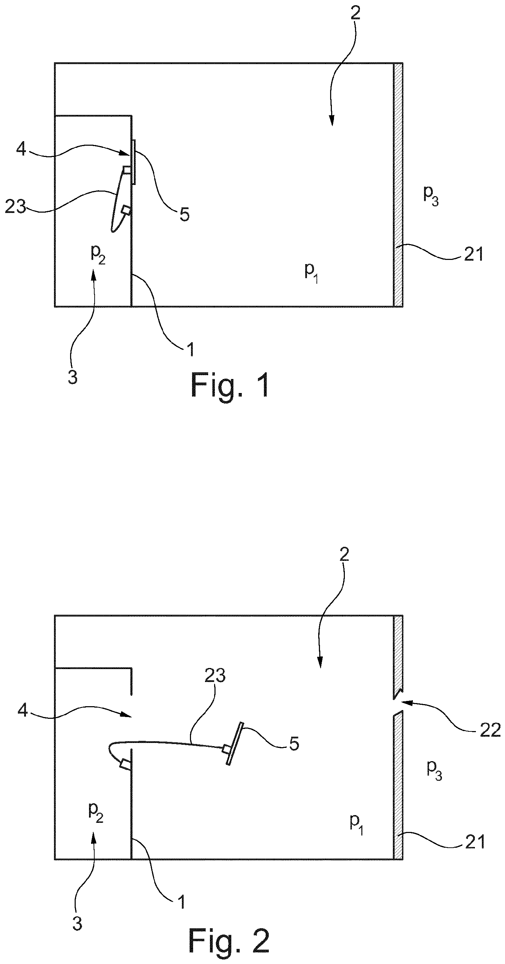

Fig. 1 zeigt schematisch und beispielhaft einen Aufbau eines Passagierflugzeugs mit einem VIP-Ausbau. Dabei ist ein erster Raum 2 vorgesehen, der beispielsweise durch ein Passagierabteil gebildet ist. An den ersten Raum 2 grenzt ein zweiter Raum 3, der durch wenigstens eine Trennwand 1 von dem ersten Raum 2 getrennt ist. Der zweite Raum 3 wird in diesem Ausführungsbeispiel vorzugsweise durch einen Aufbewahrungsraum gebildet, weiter vorzugsweise durch die Umwandung eines Möbelstücks. Auf der rechten Seite der Fig. 1 ist eine Bordwand 21 dargestellt, die den ersten Raum 2 von einer Umgebung trennt. In der Fig. 1 ist das Raumvolumen des ersten Raums 2 größer als das Raumvolumen des zweiten Raums 3; wobei im Rahmen der Erfindung die Volumenverteilung auch anders gestaltet sein kann.

Es wird angenommen, dass sich das Passagierflugzeug in Reiseflughöhe befindet, so dass der Umgebungsdruck p3 geringer ist als die Drücke p1 und p2 in dem ersten Raum 2 und dem zweiten Raum 3. Es kann weiter angenommen werden, dass sich aufgrund von minimalen Strömungsöffnungen, die beispielsweise durch Spalte gebildet sind, zwischen den Räumen 2 und 3 ein stationärer Zustand mit annähernd identischen Drücken p1 und p2 eingestellt hat.

Ferner ist zu erkennen, dass eine Strömungsöffnung 4 durch eine Dekompressionsklappe 5 verschlossen ist, so dass bis über die Strömungsöffnung 4 keine strömungstechnische Verbindung zwischen dem ersten Raum 2 und dem zweiten Raum 3 besteht.

In Fig. 2 ist der Aufbau eines Passagierflugzeugs mit VIP-Ausbau analog zu Fig. 1 kurz nach einem plötzlichen Druckabfall, beispielsweise durch ein Loch 22 in der Bordwand 21, dargestellt. Der Druckabfall des Drucks p1 wird durch eine Beschädigung 22 in der Bordwand 21 hervorgerufen, so dass sich innerhalb kürzester Zeit der Druck p1 in dem ersten Raum 2 dem Umgebungsdruck p3 angleicht. Zu diesem Zeitpunkt ist durch die Trennwand 1 und die durch die Dekompressionsklappe 5 noch verschlossene Strömungsöffnung 4 der zweite Raum 3 strömungstechnisch weitestgehend von dem ersten Raum 2 getrennt, so dass der Druck p2 zumindest für einen kurzen Zeitraum unmittelbar nach dem Druckabfall in dem ersten Raum 2 als konstant angenommen werden kann; der Druck p2 ist somit größer als der Druck p1.

Sobald ein kritischer Differenzdruck |p2-p1| überschritten ist, wird eine Befestigung zum Halten der Dekompressionsklappe 5 in der Trennwand 1 freigegeben, so dass sich die Dekompressionsklappe 5 schlagartig löst und eine Lösebewegung in den ersten Raum 2 hinein vollzieht.

Wie ebenfalls in Fig. 2 dargestellt, ist die Lösebewegung durch ein Sicherungsband 23 begrenzt, so dass die Dekompressionsklappe 5 nur bis in eine in Fig. 2 dargestellte Endposition gelangen kann. Alternativ kann auch eine einseitige fixe Anbindung der Dekompressionsklappe 5 über einen Drehbeschlag vorgesehen sein.

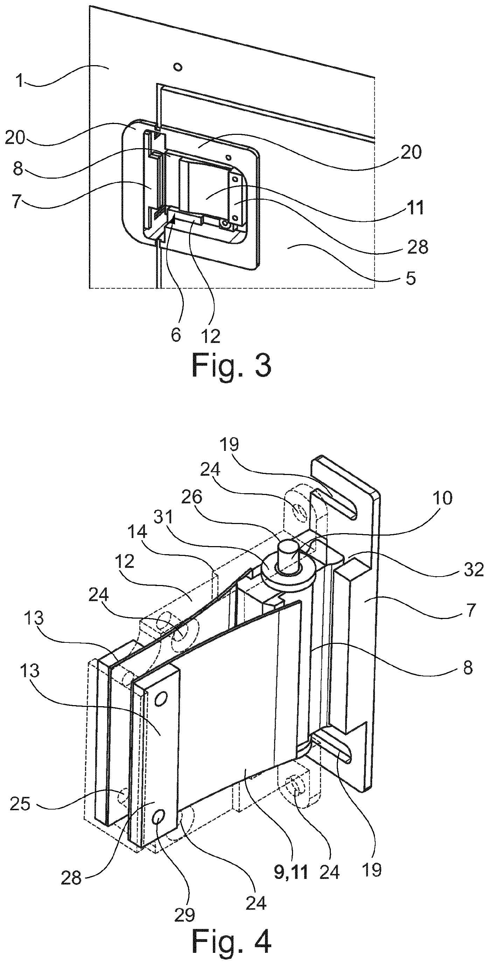

Die Dekompressionsklappe 5 sowie die Verbindung mit der Trennwand 1 sind in Fig. 3, und im Detail in Fig. 4 dargestellt. Zum erleichterten Einbau an der Dekompressionsklappe 5 und an der Trennwand 1 werden die Dekompressionsklappe 5 und der fest montierte Teil der Trennwand 1 mit Einsätzen 20 versehen, in die die Verbindungselemente montiert werden. Für die Einsätze 20 können an der Dekompressionsklappe 5 und an der Trennwand 1 Aussparungen vorgesehen sein, in die die Einsätze 20 hinein montiert werden können, beispielsweise durch Einkleben der Einsätze 20 in an die Form der Einsätze 20 angepasste Aussparungen. Dadurch wird erreicht, dass der Verbindungs- und Sicherungsmechanismus nicht über die Außenfläche der Dekompressionsklappe 5, bzw. der Trennwand 1 hinausragt und negativ in das Erscheinungsbild der Einbauten eingreift. Dabei ist ein Aufnahmeelement 7 in dem Einsatz 20, der an der Trennwand 1 eingelassen ist, angeordnet. An dem Einsatz 20, der an der Dekompressionsklappe 5 eingelassen ist, ist das Sicherungselement 6 über ein Halteelement 12 fixiert, an dem die weiteren Einzelteile der Vorrichtung angebracht sind. Dabei steht es der Funktionsweise der erfindungsgemäßen Vorrichtung nicht entgegen, wenn die Einsätze 20 an dem jeweils anderen Teil der Trennwand 1, bzw. Dekompressionsklappe 5 verbaut sind. Die Fig. 1 zeigt die erfindungsgemäße Vorrichtung im Normalbetrieb, also bei einem Differenzdruck |p2-p1|, der kleiner ist als der vorbestimmte kritische Differenzdruck |p2-p1|, bei dem die Vorrichtung auslösen soll. Dabei ist ein Drehelement 8 mit dem Ende eines Schenkels 16 in einem Aufnahmeelement 7 aufgenommen, während das Ende des gegenüberliegenden Schenkels 17 des Drehelements 8 zwischen zwei Fixierelementen 9 eingefasst ist, wobei in der seitlichen Darstellung der Fig. 3 nur eine Seite der Vorrichtung sichtbar ist und das zweite Fixierelement 9 somit verdeckt ist. In dem dargestellten Ausführungsbeispiel sind beide Fixierelemente 9 als Federelemente 11 ausgeführt, hier als flächige, rechteckförmige Biegefedern.

Die erfindungsgemäße Vorrichtung ist in den Einsätzen 20 aufgenommen und eine bevorzugte Ausführungsform ist in Fig. 4 detailliert dargestellt. Das Halteelement 12 erstreckt sich zentral in Verlaufsrichtung der Dekompressionsklappe 5 und ist mit Befestigungsaufnahmen versehen. Zur Befestigung an den zugeordneten Einsätzen 20 oder direkt an die Trennwand 1, bzw. die Dekompressionsklappe 5 sind Durchführungen 24 vorgesehen, durch die zur Befestigung geeignete Befestigungsmittel (nicht dargestellt) geführt werden können und eine sichere Fixierung des Halteelements 12 bei allen Betriebskonditionen gewährleisten. Die Befestigungsmittel können dabei in einfacher Weise durch Schrauben oder Nieten realisiert sein. Zusätzlich sind in einem Befestigungsbereich 13 des Halteelements 12 Durchführungen 25 vorgesehen, die eine Befestigung der Fixierelemente 9, bzw. Federelemente 11 gewährleisten. Im dargestellten Ausführungsbeispiel ist der Befestigungsbereich 13 durch zwei ebene, zueinander parallel verlaufende gegenüberliegende Seiten des Halteelements 12 gebildet. Diese ebenen Flächen sind zum flächigen Anliegen der Fixier- bzw. Federelemente 9, 11 vorgesehen. Die Federelemente 11 sind im montierten Zustand im Befestigungsbereich 13 des Halteelements 12 zwischen dem Befestigungsbereich 13 des Halteelements 12 und zusätzlichen Klemmbacken 28 angeordnet, die das flächige Anliegen der Federelemente 11 unterstützen. Zu den Durchführungen 25 des Halteelements 12 im Befestigungsbereich 13 sind korrespondierende Durchführungen 29 in den Federelementen 11 und den Klemmbacken 28 vorgesehen, so dass eine Montage beispielsweise über Steckstifte oder Langschrauben erfolgen kann. Aber auch andere geeignete Befestigungsmittel sind im Rahmen dieser Erfindung denkbar.

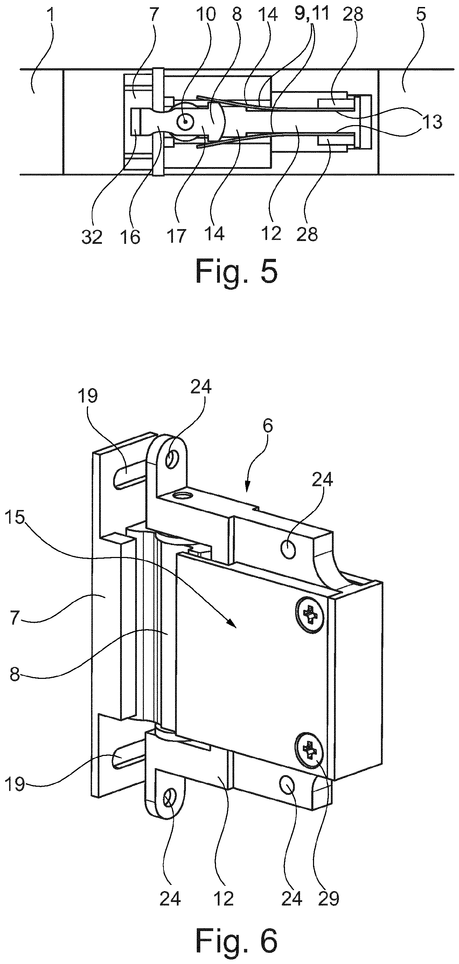

Das Halteelement 12 weist zusätzlich noch Aufnahmen 26 für ein Drehlager des Drehelements 8 auf, das die Drehachse 10 des Drehelements 8 bildet. Die Drehachse 10 verläuft dabei mittig in der zentralen Ebene des Halteelements 12 sowie parallel zur Verlaufsrichtung des Aufnahmeelements 7, d.h. parallel zu der Außenkante der Dekompressionsklappe 5, bzw. der Trennwand 1 und ist an dem vom Befestigungsbereich 13 entfernten Ende des Halteelements 12, also in unmittelbarer Nähe des Spalts zwischen Trennwand 1 und Dekompressionsklappe 5, angeordnet. Das Drehelement 8 ist drehbar um eine Drehachse 10 gelagert mit geeigneten Abstandshaltern 31 zum Halteelement 12 positioniert, so dass eine möglichst freigängige reibungsarme Bewegung ermöglicht wird. Das Drehelement 8 ist mittig zwischen den Federelementen 11 positioniert und dabei so dimensioniert, dass es im Normalbetrieb möglichst spielfrei gelagert ist. Im dargestellten Ausführungsbeispiel ist die spielfreie Fixierung dadurch gewährleistet, dass die Ausdehnung des Drehelements 8 an dem Ende des Schenkels 17 des Drehelements 8, das zwischen den Federelementen 11 fixiert ist, genau, d.h. im Rahmen von üblichen Toleranzen, dem Abstand der Federelemente 11 zueinander an dieser Position entspricht. In der in Fig. 5 dargestellten Draufsicht ist die Positionierung im Normalbetrieb ebenfalls deutlich zu erkennen. Das Drehelement 8 erstreckt sich in einem ersten Schenkel 17 von der Drehachse 10 zu dem Ende hin, das zwischen den Federelementen 11 positioniert ist und in einem zweiten Schenkel 16 von der Drehachse 10 in eine dem ersten Schenkel 17 entgegengesetzte Erstreckungsrichtung bis zu dem Ende, das in dem Aufnahmeelement 7 aufgenommen ist. Das Aufnahmeelement 7 wird im Wesentlichen von einer parallel zur Erstreckungsrichtung des Trennelements 1, bzw. der Dekompressionsklappe 5 verlaufenden Nut 32 gebildet, wobei die Abmessungen der Nut 32 und des Aufnahmeendes 16 des Drehelements 8 derart korrespondieren, dass das Drehelement 8 spielfrei in der Nut 32 aufgenommen ist. Dabei ist es vorteilhaft, dass das Ende des Drehelements 8, das zur Aufnahme in die Nut 32 des Aufnahmeelements 7 vorgesehen ist, eine abgerundete Form aufweist, um ein Verkanten während der Lösebewegung der Dekompressionsklappe 5 zu vermeiden. Insbesondere ist es vorteilhaft dieses Ende des Drehelements 8 kreisförmig auszuführen, damit es sich aus der Nut 32 optimal herausdrehen kann.

In Fig. 5 ist zu erkennen, dass das Halteelement 12 Anlagekanten 14 für die Federelemente 11 aufweist, die durch eine Stufe gebildet sind, die sich über die ebene Fläche des Befestigungsbereichs 13 des Halteelements 12 erhebt. Die Federelemente 9, 11 liegen im Befestigungsbereich 13 flächig am Halteelement 12 an sowie an den Anlagekanten 14, wodurch die Federelemente 11 eine Vorspannung erfahren. Das Anliegen an den Anlagekanten 14 ermöglicht dabei eine Positionierung der Federelemente 11 unabhängig von deren Federstärke, wodurch eine reproduzierbare mittige spielfreie Positionierung und Fixierung des Drehelements 8 gewährleistet wird, selbst bei Verwendung von Federelementen 11 mit unterschiedlicher Federstärke.

Für den standardisierten Betrieb können Federelemente 11 mit mehreren Standard-Federstärken verwendet werden, die sich untereinander kombinieren lassen. Dabei können etwa die Blechstärken der Federelemente und deren Geometrie modifiziert werden. Das Federelement kann beispielsweise T-förmig ausgeführt sein. So ist es denkbar, vorbestimmte Auslösekräfte dadurch zu gewährleisten, dass einzelne Federelemente 11 unterschiedlicher Federstärken passend kombiniert werden und gestapelt ein kombiniertes Federelement 11 bilden. Dadurch wird eine weitgehend frei kombinierbare und reproduzierbare Anpassung an unterschiedliche Auslösekräfte ermöglicht ohne aufwändige Erprobungsmaßnahmen.

Wird im Falle eines Druckabfalls die Dekompressionsklappe 5 mit Druck beaufschlagt, wird die Dekompressionsklappe 5 in Richtung des Raums 2 mit geringerem Druck bewegt, wodurch das Drehelement 8 eine Rotation erfährt, wodurch wiederum ein Federelement 11 über seine Vorspannkraft hinaus weiter gespannt wird. Das jeweils andere Federelement 11 liegt weiter an der Anlagekante 14 auf, so dass es keine Kräfte auf das Drehelement 8 ausübt. Ab einer gewissen Drehbewegung des Drehelements 8 und somit ab einer erreichten Auslösekraft, dreht sich das Drehelement 8 mit seinem Aufnahmeende 16 aus der Nut 32 des Aufnahmeelementes 7 heraus, wodurch die Dekompressionsklappe 5 ausgelöst und freigegeben wird. Die auf die Dekompressionsklappe 5 wirkende Kraft wird auf die Federelemente 11 übertragen. Da das Drehelement 8 beim Auslösen sowohl um die Drehachse 10 dreht, als auch im Aufnahmeelement 7 abrollt, ist der Spalt zwischen Dekompressionsklappe 5 und Trennwand 1 unkritisch im Hinblick auf seine genauen Abmessungen.

Das Drehelement 8 dreht bis zu einem maximalen Drehwinkel, hier beispielsweise etwa 90°, und schlägt dann an dem Federelement 11 an, das nicht betätigt wird, so dass ein Durchschwingen des Drehelements 8 über den maximalen Drehwinkel hinaus vermieden wird. Dazu können die Abmessungen des Drehelements 8 angepasst werden, wie beispielsweise durch eine Verjüngung des Aufnahmeschenkels 16 in Fig. 5.

Falls ein Auslösen der Dekompressionsklappe 5 in eine Richtung ausgeschlossen sein soll, kann ein Fixierelement 9 explizit nicht als Federelement 11, sondern als starres Element 15 ausgeführt sein, wie in Fig. 6 gezeigt. Anstelle eines Federelements 11 ist ein starres Bauteil 15 verbaut, das durch seine massivere Ausführung ein Federn oder sonstige elastische Verformung während der zu erwartenden Betriebsparameter ausschließt. An diesem Fixierelement 9, 15 können ebenfalls Durchgangslöcher 29 zur Aufnahme von Befestigungsmitteln vorgesehen sein, so dass eine Montage analog zu Federelement 11 und Klemmbacke 28 ermöglicht wird.

## Patentansprüche

1. Vorrichtung zum Ausgleichen einer Druckdifferenz für ein Luftfahrzeug, umfassend
- eine flächige, luftfahrzeugfeste Trennwand (1), die einen ersten Raum (2) strömungstechnisch von einem zweiten Raum (3) trennt, wobei
- die Trennwand (1) eine den ersten und den zweiten Raum (2, 3) strömungstechnisch verbindende Strömungsöffnung (4) aufweist, und
- eine die Strömungsöffnung (4) verschließende Dekompressionsklappe (5), wobei
- ein Sicherungselement (6) an der Dekompressionsklappe (5) oder an der Trennwand (1) dazu eingerichtet ist, eine Lösebewegung der Dekompressionsklappe (5) bei Überschreiten eines vorbestimmten Druckgradienten zwischen dem ersten und dem zweiten Raum (2, 3) freizugeben, so dass eine strömungstechnische Verbindung zwischen dem ersten und dem zweiten Raum (2, 3) besteht, wobei
- an der Trennwand (1) oder an der Dekompressionsklappe ein Aufnahmeelement (7) vorgesehen ist, mit welchem das Sicherungselement (6) in Wirkverbindung steht,
wobei
- das Sicherungselement (6) ein Drehelement (8) und mindestens zwei Fixierelemente (9) umfasst, wobei
- das Drehelement (8) um eine Drehachse (10) drehbar gelagert ist,
- das Drehelement (8) zur Aufnahme in das Aufnahmeelement (7) vorgesehen ist,
- die Fixierelemente (9) das Drehelement (8) unterhalb des vorbestimmten Druckgradienten drehfest in einer Fixierposition fixieren und
- mindestens eines der mindestens zwei Fixierelemente (9) ein Federelement (11) ist, **dadurch gekennzeichnet, dass**
- das mindestens eine Federelement (11) ein flächiges Biegefederelement ist.

2. Vorrichtung nach Anspruch 1, wobei das mindestens eine Federelement (11) vorgespannt ist.

3. Vorrichtung nach Anspruch 2, wobei die mindestens zwei Fixierelementen (9) genau zwei Fixierelemente (9) sind und beide Fixierelemente (9) als Federelemente (11) ausgeführt sind, wobei die Drehachse (10) und die Federelemente (11) an einem Halteelement (12) befestigt sind.

4. Vorrichtung nach Anspruch 3, wobei die Federelemente (11) in einem Befestigungsbereich (13) flächig am Halteelement (12) anliegen.

5. Vorrichtung nach Anspruch 4, wobei die Vorspannung der Federelemente (11) durch Anliegen an Anlagekanten (14) des Halteelements (12) realisiert ist.

6. Vorrichtung nach Anspruch 5, wobei zwei Federelemente (11) mit unterschiedlichen Federstärken vorgesehen sind.

7. Vorrichtung nach einem der Ansprüche 1 bis 2, wobei ein Fixierelement (9) als starres Element (15) ausgeführt ist.

8. Vorrichtung nach einem der vorhergehenden Ansprüche, wobei das Drehelement (8) derart an die Fixierelemente (9) angepasst ist, dass mindestens ein Fixierelement (9) als Anschlagelement fungiert, das den Drehwinkel des Drehelementes (8) außerhalb der Fixierposition begrenzt.

9. Vorrichtung nach Anspruch 8, wobei die Auslenkung des Drehelements (8) aus der Fixierposition auf einen Drehwinkel um die Drehachse (10) von 90° begrenzt wird.

10. Vorrichtung nach einem der vorhergehenden Ansprüche, wobei ein Schenkel (16) des Drehelements (8), der zur Aufnahme am Aufnahmeelement (7) vorgesehen ist, eine abgerundete Form aufweist.

11. Vorrichtung nach einem der vorhergehenden Ansprüche, wobei an dem Aufnahmeelement (7) Langlöcher (19) vorgesehen sind.

## Claims

1. Device for equalizing a pressure difference for an aircraft, comprising
- a planar separating wall (1) which is fixed to the aircraft and fluidically separates a first space (2) from a second space (3),
- the separating wall (1) having a flow opening (4) which fluidically connects the first and the second space (2, 3), and
- a decompression valve (5) which closes the flow opening (4),
- a securing element (6) on the decompression valve (5) or on the separating wall (1) being designed to enable a release movement of the decompression valve (5) when a predetermined pressure gradient between the first and the second space (2, 3) is exceeded, such that there is a fluidic connection between the first and the second space (2, 3),
- a receiving element (7) being provided on the separating wall (1) or on the decompression valve, to which receiving element the securing element (6) is operatively connected, wherein
- the securing element (6) comprises a rotary element (8) and at least two fixing elements (9),
- the rotary element (8) being rotatably mounted about a rotational shaft (10),
- the rotary element (8) being provided to be received in the receiving element (7),
- the fixing elements (9) non-rotatably fixing the rotary element (8) beneath the predetermined pressure gradient in a fixing position and
- at least one of the at least two fixing elements (9) being a spring element (11), **characterized in that**
- the at least one spring element (11) is a planar flexural spring element.

2. Device according to claim 1, wherein the at least one spring element (11) is preloaded.

3. Device according to claim 2, wherein the at least two fixing elements (9) are exactly two fixing elements (9) and both fixing elements (9) are designed as spring elements (11), wherein the rotational shaft (10) and the spring elements (11) are fastened to a holding element (12).

4. Device according to claim 3, wherein the spring elements (11) abut the holding element (12) in a planar manner in a fastening region (13).

5. Device according to claim 4, wherein the preloading of the spring elements (11) is achieved by abutment against the abutment edges (14) of the holding element (12).

6. Device according to claim 5, wherein two spring elements (11) having different spring strengths are provided.

7. Device according to any of claims 1 to 2, wherein a fixing element (9) is designed as a rigid element (15).

8. Device according to any of the preceding claims, wherein the rotary element (8) is adapted to the fixing elements (9) such that at least one fixing element (9) functions as a stop element which limits the rotational angle of the rotary element (8) outside the fixing position.

9. Device according to claim 8, wherein the deflection of the rotary element (8) out of the fixing position is limited to a rotational angle of 90° about the rotational shaft (10).

10. Device according to any of the preceding claims, wherein a leg (16) of the rotary element (8) that is provided to be received on the receiving element (7) has a rounded shape.

11. Device according to any of the preceding claims, wherein slots (19) are provided on the receiving element (7).

## Revendications

1. Dispositif pour compenser une différence de pression d'un aéronef, comprenant
- une cloison (1) plane, fixée à demeure sur l'aéronef, laquelle sépare du point de vue fluidique un premier espace (2) d'un second espace (3), dans lequel
- la cloison (1) comporte une ouverture d'écoulement (4) reliant de manière fluidique le premier et le second espace (2, 3) et
- un clapet de décompression (5) fermant l'ouverture d'écoulement (4), dans lequel
- un élément de sécurité (6) sur le clapet de décompression (5) ou sur la cloison (1) est configuré pour libérer un mouvement de détachement du clapet de décompression (5) lors du dépassement d'un gradient de pression prédéfini entre le premier et le second espace (2, 3), de telle sorte qu'une liaison fluidique existe entre le premier et le second espace (2, 3), dans lequel
- un élément de réception (7) est prévu sur la cloison (1) ou sur le clapet de décompression, avec lequel l'élément de sécurité (6) est en liaison fonctionnelle, dans lequel
- l'élément de sécurité (6) comprend un élément rotatif (8) et au moins deux éléments de fixation (9), dans lequel
- l'élément rotatif (8) est monté rotatif sur un axe de rotation (10),
- l'élément rotatif (8) est prévu pour être reçu dans l'élément de réception (7),
- les éléments de fixation (9) fixent l'élément rotatif (8) en dessous du gradient de pression prédéfini de manière solidaire en rotation dans une position de fixation et
- au moins un des au moins deux éléments de fixation (9) est un élément formant ressort (11), **caractérisé en ce que**
- l'au moins un élément formant ressort (11) est un élément plan formant ressort de flexion.

2. Dispositif selon la revendication 1, dans lequel l'au moins un élément formant ressort (11) est précontraint.

3. Dispositif selon la revendication 2, dans lequel les au moins deux éléments de fixation (9) sont exactement deux éléments de fixation (9) et les deux éléments de fixation (9) sont réalisés sous la forme d'éléments formant ressort (11), l'axe de rotation (10) et les éléments formant ressort (11) étant fixés sur un élément de maintien (12).

4. Dispositif selon la revendication 3, dans lequel les éléments formant ressort (11) reposent à plat contre l'élément de maintien (12) dans une zone de fixation (13).

5. Dispositif selon la revendication 4, dans lequel la précontrainte des éléments formant ressort (11) est réalisée en les appliquant sur des bords d'appui (14) de l'élément de maintien (12).

6. Dispositif selon la revendication 5, dans lequel deux éléments formant ressort (11) sont prévus avec différentes puissances de ressort.

7. Dispositif selon l'une des revendications 1 à 2, dans lequel un élément de fixation (9) est réalisé sous la forme d'un élément rigide (15).

8. Dispositif selon l'une des revendications précédentes, dans lequel l'élément rotatif (8) est adapté aux éléments de fixation (9) de telle manière qu'au moins un élément de fixation (9) sert d'élément de butée, qui limite l'angle de rotation de l'élément rotatif (8) en dehors de la position de fixation.

9. Dispositif selon la revendication 8, dans lequel le déplacement de l'élément rotatif (8) hors de la position de fixation est limité à un angle de rotation sur l'axe de rotation (10) de 90°.

10. Dispositif selon l'une des revendications précédentes, dans lequel un côté (16) de l'élément rotatif (8), qui est prévu pour être reçu sur l'élément de réception (7), présente une forme arrondie.

11. Dispositif selon l'une des revendications précédentes, dans lequel des trous oblongs (19) sont prévus sur l'élément de réception (7).
